# EUROPEAN PATENT APPLICATION

(11) **EP 2 006 170 A2**
(43) Date of publication of application: **24.12.2008**
(21) Application number: 08158200.9
(22) Date of filing: 13.06.2008
(51) Int. Cl.: B60R 25/04

(54) **Apparatus and method for starting automobile engine**

(30) Priority: 14.06.2007 KR 20070058570
(71) Applicant: Yang, Jae Woo, Yousung-gu Daejun (KR)
(72) Inventor: Yang, Jae Woo, Yousun-gu Daejun (KR); Kim, Min Seok, Yeongdo-gu Busan (KR); Kim, Young Tak, Nam-gu Busan (KR); Ko, Jae Pyung, Yangsan SI Gyeongsangnam-Do (KR)
(74) Representative: TBK-Patent

(57) **Abstract**

The present invention relates to an apparatus and method for starting automobile engine by a radio communication between an automobile smart key and a smart key electronic control unit (ECU). The present invention provides an apparatus and a method for the starting of an automobile engine wherein it is decided whether or not a transmission lever P position signal and a break pedal signal are decided to be ON, a smart key ECU requests a smart key for a smart key ID in case the both signals are ON, the smart key ECU receives the smart key ID from the smart key, performs the verification of the smart key using the received smart key ID and turns the starting control relay ON in case that the smart key is verified, and supplies the electric power which is supplied through the ignition switch to the starting motor thereby the automobile engine being started in case that the ignition switch is turned ON within the prescribed time T after the starting control relay is turned ON.

## Description

### [Technical Field]

The present invention relates to an apparatus and a method for starting automobile engine, specifically to an apparatus and a method for starting automobile engine wherein the automobile engine can be started through a radio communication between an automobile smart key and a smart key electronic control unit(hereinafter, referred to as ECU).

### [Background Art]

As the use of an automobile increases, the automobile comes to be a necessity of modern people, and the need for a convenient service is also increasing in connection with a management and maintenance of the automobile. Recently, interest in a system is increasing which detects and notifies the theft of an automobile utilizing a smart key ECU and a radio frequency identification system (RFID) which controls the starting of the automobile engine to prevent the theft of the automobile. That is, there has been a need for a technology which can start an automobile engine more conveniently to provide a quality service of the management and maintenance of the automobile for the busy modern people.

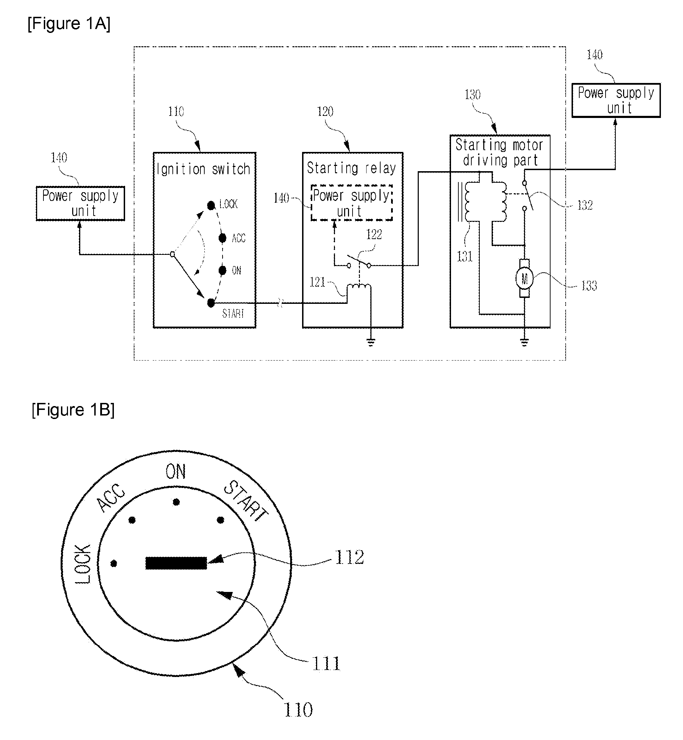

The automobile engine starting apparatus of the conventional art is to be described referring to figs. 1A and 1B. An ignition switch 110 is able to change the status of the automobile when a physical automobile key (not shown in the figs.) is inserted into a key hole 112 provided in a key cylinder 111, and then the automobile key is rotated. The rotation steps of the automobile key are comprised of 4 steps, that is, LOCK, power supply to the accessory (ACC), on of the control device and deriving device (ON) and START, wherein the automobile key is able to be inserted into an ignition lock and released from the ignition lock on in the LOCK step and starts the engine of the automobile in the START step.

In case of the conventional automobile where a start key system or an immobilizer system is not adapted, the automobile key is inserted into the key hole 112 and the ignition switch 110 is rotated to the START position where the engine is started, thereby power supply being started by a power supply unit 140. Then, power is supplied to a starting relay 220 through the ignition switch 110. In starting relay 120, electricity is supplied to the coil 121 so that the first switch 122 becomes to be on and the power supply unit 140 supplies electric power to solenoid coil 131 of the starting motor driving part 130. Thus, the second switch 132 successively becomes to be on, so that electric power is supplied to the starting motor 122 from the power supply unit 140, thereby the engine being started. In the conventional art, however, automobile is subject to be theft because the automobile key can be copied, and the automobile key has to be manually inserted to the key cylinder to start the automobile.

Therefore, there has been a need for the development of a technology wherein the theft of the automobile can be prevented and only valid driver can conveniently start the automobile engine.

### [Disclosure of the Invention]

An aspect of the present invention provides an apparatus and a method for starting an automobile engine wherein a smart key ECU decides the validity of the smart key through the radio communication with the smart key when the break pedal signal and the transmission lever parking position signals are ON, and in case the smart key is decided to be valid, the smart key ECU starts the automobile engine.

Another aspect of the present invention provides an apparatus and a method for starting an automobile engine wherein in case the validity of the smart key is confirmed, the driver can start the engine without physically inserting the automobile.

For providing the above-described aspects, the present invention provides a smart ECU of an automobile engine starting apparatus, comprising, a transmission part, a receiving part, a starting control relay, and a MCU (Micro Control Unit). Wherein the transmission part transmits a smart key ID request signal to a smart key wirelessly, the receiving part receives the smart key ID from the smart key, the starting control relay supplies an electric power provided through a ignition switch to a starting relay, and the MCU transmits the request signal of the smart key ID to the smart key through the transmission part in case that the break pedal signal is turned ON at the state that the transmission lever P position signal is ON, receives the smart key ID from the smart key through the receiving part, performs a verification of the smart key by comparing the received smart key ID with a prescribed ID, and turns the starting control relay ON in case the smart key is verified.

Further, the present invention provides an automobile engine starting apparatus, comprising, an ignition switch, a smart key, a smart key ECU, a starting relay and a starting motor driving part. Wherein the ignition switch ignites the automobile engine thereby supplying electric power for the starting of the automobile, the smart key is prescribed with its unique ID therein and is able to communicate wirelessly, the smart key ECU performs a verification of the smart key in case that a transmission lever P position signal and a break pedal signal are ON, and supplies the electric power which is supplied by the ignition switch to the other parts in case the ignition switch is turned ON within a prescribed time T since the verification of the smart key, the starting relay switches the supply of the electric power according to the electric power which is supplied from the smart key ECU through the ignition switch, and the starting motor driving part is supplied with the electric power according to the switching of the starting relay and drives a driving motor for the starting of the automobile engine with the supplied electric power.

Further, the present invention provides an automobile engine starting method which comprises the first step where it is decided whether or not a transmission lever P position signal and a break pedal signal are decided to be ON, the second step where a smart key ECU requests a smart key for a smart key ID in case the both signals are ON, the third step where the smart key ECU receives the smart key ID from the smart key and performs the verification of the smart key using the received smart key ID, the fourth step where the starting control relay is ON in case that the smart key is verified; and the fifth step where the automobile engine is started by supplying the electric power which is supplied through the ignition switch to the starting motor through the starting relay in case that the ignition switch is turned ON within the prescribed time T after the starting control relay is turned ON.

### [Brief Description of the Drawings]

Fig. 1A shows a block diagram illustrating the constitution of an automobile engine starting apparatus of the art.
Fig. 1B shows a plane view of an ignition switch in fig. 1A.
Fig. 2A shows a block diagram illustrating the constitution of an automobile engine starting apparatus according to an embodiment of the present invention.
Fig. 3 shows a flow chart of an automobile engine starting method according to an embodiment of the present invention.
• Reference numerals for primary elements in the drawings

| | | | |
|---|---|---|---|
| 210 | ignition switch | 211 | ignition nob |
| 220 | smart key | 230 | smart key ECU |
| 231 | receiving part | 232 | transmission part |
| 233 | micro control unit (MCU) | 234 | starting control relay |
| 235 | timer | 240 | starting relay |
| 250 | starting motor driving part | 251 | starting solenoid |
| 253 | starting motor | 260 | power supply unit |
| 270 | break pedal signal | | |
| 280 | transmission lever P position signal | | |

### [Best Mode for Carrying Out the Invention]

The present invention will now be described more fully hereinafter with reference to the embodiments below. This invention may, however, be embodied in many different forms and should not be construed as limited to the embodiments set forth herein. Rather, the disclosed embodiments are provided so that this disclosure will be thorough and complete, and will fully convey the scope of the invention to those skilled in the art. Well-known structures and processes are not described or illustrated in detail to avoid obscuring the essence of the present invention.

### Automobile Engine Starting Device

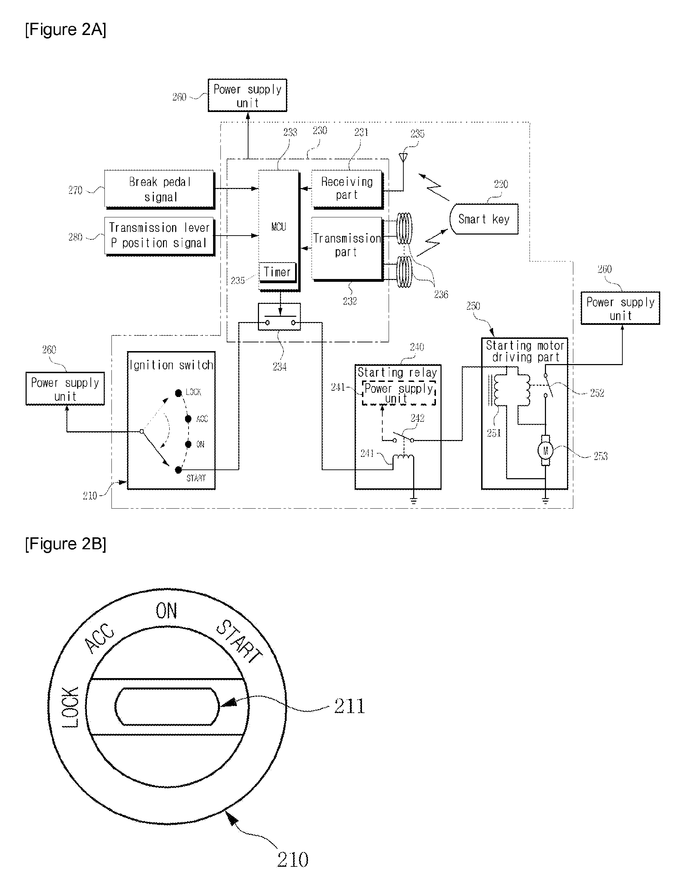

The automobile engine starting device according to the embodiment of the present invention includes an ignition switch 210, a smart key 220, a smart key ECU 230, a starting relay 240 and a starting motor driving part 250 as shown in figs. 2A and 2B.

The ignition switch 210 is for starting the automobile engine by igniting the automobile engine. A driver sits on a driver's seat and rotates an automobile key to start the engine of the automobile. The status of the automobile is converted in accordance with the rotation steps of the automobile key, which are comprised of LOCK, power supply to the accessory (ACC), on of the control device and deriving device (ON) and START, wherein the automobile key can be inserted into an ignition lock and released form the ignition lock only in the LOCK position, and the engine can be started in the START step. That is, when the ignition switch 210 is rotated to the START step the electricity is supplied to the ECU 230 by the power supply unit 260, and then to the starting motor 253 through the starting relay 204, and thus the engine can be started.

The ignition switch 210 may include an ignition nob 211 as shown in fig. 2B. the ignition nob 211 converts to the UNLOCK state from the LOCK state as soon the smart key 220 is verified, and successively coverts the steps of the ignition switch 210 as LOCK-ACC-ON-START, so that the ignition nob 211 can manipulate the starting process. Thus, the driver can start the automobile more conveniently. Using the ignition nob 211, the driver can converts the ignition switch 210 from the LOCK step to the START step, where electric power is supplied to the starting motor 253 for the starting of the automobile engine without the automobile key being inserted.

The smart key 220 performs radio communication with the smart key ECU 230, the type of the radio communication being low frequency (LF) communication and radio frequency (RF) communication. In the present embodiment, the smart key 220 includes a unique identifier ID and exchanges the ID with the smart key ECU 230 through the radio communication. Desirably, the smart key 220 transmits the ID to the smart key ECU through the radio communication when the smart key 220 receives a requesting signal of the ID form the smart key ECU 230 through the radio communication.

The radio communication is being widely used in the lives of the modern people, the examples of which includes a cellular phone, a beeper, a household wireless phone, a wireless automobile starter, a bus card, a transportation card, an identification tag, wireless RF barcode tag in a shopping center, television and radio broadcastings, GPS, location recognition system and a weather-forecast (a weather radar). The present embodiment adopts the LF/RF communications as its communication type.

The smart key ECU 230 is supplied with the electric power of the electric power unit 260 supplied by the ignition switch 210, and requests for the smart key ID through the radio communication. On receiving the smart key ID from the smart key 220, the smart key ECU 230 verifies the smart key 220 by comparing the received smart key ID with a prescribed ID. Then, when the smart key 220 is verified, the smart key ECU supplies the electric power supplied by the power supply unit 260 through the ignition switch 210 to the starting relay 240.

Further, the smart key ECU 230 includes a receiving part 235, a transmission part 236, a micro control unit (hereinafter, referred to as MCU), a starting control relay 234 and a timer 235. The receiving part 235 and the transmission part 236 perform the radio communication with the smart key 220 and the MCU 233 performs the verification of the smart key 220 and controls the smart key ECU 230 in general. The starting relay 234 supplies or cuts the electric power for driving the starting relay 240 according to the control of the MCU 233. The timer 235 counts the time since the verification of the smart key 220 and provides the MCU with the counted time.

The receiving part 231 and the transmission part 234 exchange data through the radio communication with the smart key 220. The transmission part 232 transmits a signal requesting for the smart key ID through the radio communication in case the parking position signal 280 of the transmission lever and the break pedal signal of an automatic transmission are ON. The receiving part 231 receives the smart key ID transmitted from the smart key 220 in response to the request signal.

In the above, the transmission part 232 transmits the ID request signal to the smart key 220 through the LF communication, while the receiving part 231 receives the smart key ID from the smart key through the RF communication. Wherein the transmission part 232 may includes two or more antenna which transmit a wave with the frequency of 120 ~ 130 kHz, while the receiving part 231 includes one or more antenna which transmit a wave with the frequency of 310 - 320 MHz or 430 - 440 MHz. These frequency bands are merely examples, and thus are subject to various modifications.

As for the break pedal signal 270, when the driver steps on the break pedal, ON signal is outputted to the MCU 233 through a signal processing in a switch(not shown in the fig.) provided therein, while when the driver does not step on the break pedal, OFF signal is outputted to the MCU 233. Regarding the transmission lever P position signal 280, when the automatic transmission lever is positioned in P position, ON signal is outputted to the MCU 233 according to a signal processing in a switch (not shown in the fig.). In genera, the P position of the automatic transmission lever is used when parking or starting an automobile, the N position is used when starting an automobile in neutral poison or stops the automobile for a considerable time interval while driving and the D position is used when driving an automobile. Further, when starting an automatic automobile, the transmission lever is positioned from the P position to the D position via the R and the N positions, and the MCU 233 checks the initial state, or the P position state. That is, when the transmission lever is positioned at the P position which indicates that the automobile is at parking state, the MCU 233 perceives that the transmission lever P position signal 280 is ON.

The MCU 233 performs the verification of the smart key 220 by comparing the smart key ID received by the receiving part 231 with the prescribed ID. In case the smart key 220 is verified, the MCU 233 turns ON the starting control relay 234 to transmit the electric power supplied by the power supply unit 260 through the ignition switch 210.

Desirably, the starting control relay desirably may include a switch. The switch is at opened state initially, and when the ON signal is received from the MCU 233, the switch is closed by the starting control relay 234, so that the electric power, which is supplied by the power supply unit 260 through the ignition switch 210, is supplied to the starting relay 240.

The timer 235 counts the time since the verification of the smart key 220 by the MCE 233. Using the time counted by the timer 235, the MCU 233 turns OFF the staring control relay 234 which is turned ON, in case the START signal of the ignition switch 210 is ON within a prescribed time T. Thus, the engine cannot be started if the START signal of the ignition switch 210 is ON with in the predestined time since the verification of the smart key. In this case, to start the engine, the driver steps on the break pedal again under the condition that the transmission lever P position signal 280 is ON, such that the break pedal signal 270 be ON again. Namely, the break pedal signal 270 is ON again at the state that the transmission lever P position signal 280 is ON, the MCU 233 turns ON the starting control relay 234 through the verification process.

In the exemplary embodiment, the timer and the MCU 233 is shown as a one chip, constitution of the timer and the MCU 233 is not limited to the illustrated example. For example, the smart key ECU may comprise the MCU and the timer separately, wherein the timer may be operated by the control of the MCU.

The starting relay 240 transmits the electric power to the starting motor driving part 250 which is supplied form the smart key ECU 230. In the starting relay 240, the electric power is supplied to a coil 241 through the starting control relay 234, then the third switch 242 is ON which is interlocked with the coil 241, thereby the electric power being supplied to the starting motor driving part 250. The starting motor driving part 250 receives the electric power which is supplied form the starting relay 240, and drives the starting motor 253 to drive the engine of the automobile. Further describing, in case the starting relay 240 is ON and the switch on the ignition switch is turned to the START position, or ON, the electric power passes though the ignition switch 210, then is supplied to the starting motor driving part 250 through the smart key ECU 230 and the starting relay 240. The starting motor driving part 250 comprises a starting solenoid 251, the fourth switch 252 and a starting motor 253. The starting solenoid 251 is comprised of the first coil and the second coil, wherein the electric current is supplied to the first coil, thus generating induced voltage in the second coil. Therefore, the fourth switch is turned ON which is interlocked with the generated voltage, the electric power is supplied to the starting motor 253 from the power supply unit 260, so that the starting motor is driven and the engine of the automobile is started.

As described in the above, when the transmission lever P signal 280 and the break pedal signal 270 of the automatic transmission provided in the automobile are ON by the driver, the smart key ECU 230 requests the smart key 220 for the smart key ID and performs the verification of the smart key 220 using the smart key ID which is received from the smart key 220 in response to the ID request. When normally verified, the MCU 233 turns ON the starting control relay 234 to drive the starting relay 240. Then, when the ignition switch 210 is turned ON by the driver, the electric power supplied by the power supply unit 260 through the ignition switch 210 is transferred to the starting relay 240, then the starting relay 240 transfers the electric power to the starting motor driving part 250, thereby the automobile engine being started. In case the ignition switch 210 is not turned ON within the predestine time after the verification of the smart key, the MCU 233 turns OFF the starting control relay 234, so that the engine may be not started.

### Engine Starting Method

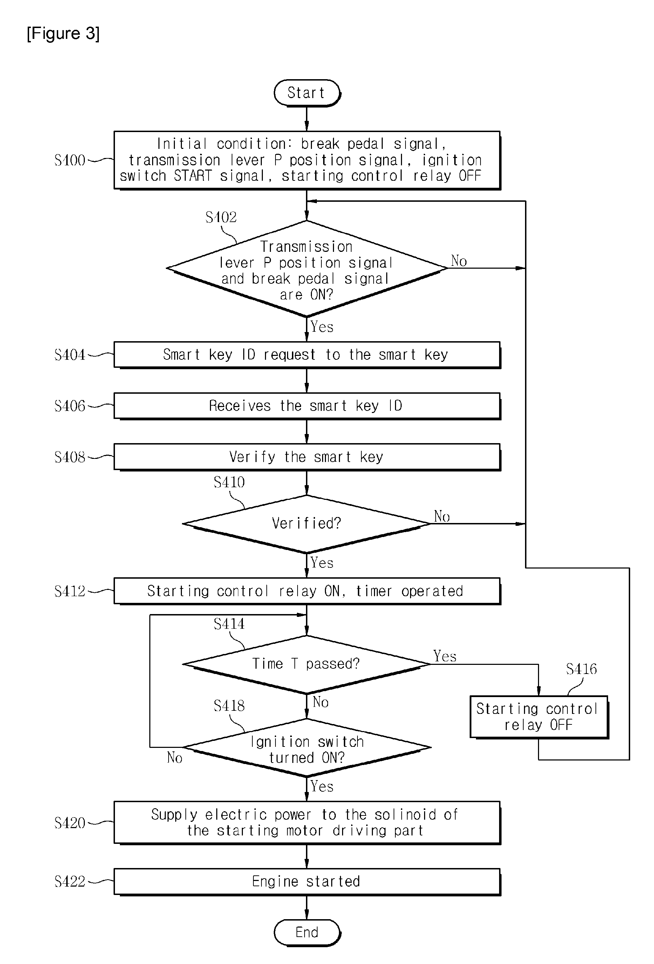

The method for starting an automobile engine according to an embodiment of the present invention is described herein referring to figs. 2A and 3.

The engine starting method according to the present embodiment starts under the initial condition of the step S400. The initial condition is a condition before a driver starts the automobile engine, comprising a break pedal signal 270, a transmission lever P position signal 280, a START signal of the ignition switch 210 and a state where a starting control relay 234 is OFF.

Then, at step S402, the smart key ECU 230 decides whether or not the transmission lever P position signal 280 and the break pedal signal 270 are ON to start the automobile engine. Namely, the smart key ECU 230 decides whether or not the break pedal signal 270 is on under the state where the transmission lever P position signal 280 is ON.

In case the both signals 270 and 280 are decided to be ON at the step 402, the smart key ECU 230 requests the smart key 220 for the smart key ID through the transmission part 232 at step S404.

At step 406, the smart key 220 transmits the smart key ID prescribed in the smart key to the smart key ECU 230 in response to the request, the smart key ECU 230 receives the smart key ID from the smart key through the receiving part 231.
At step 408, the MCU 2330 of the smart key ECU 230 performs the verification of the smart key 220 by comparing the received smart key ID with the ID prescribed in the smart key 220, and at step 410, the MCU 233 decides whether the smart key is verified.

In case the smart key is not decided to be verified at step 410, the MCU 233 repeats the above process from the step S402. On the other hand, if it is decided that the smart key is verified, the MCU 233 turns ON the starting control relay 234 and operates the timer 235 simultaneously at step S412. Wherein, the timer 235 counts the time since the verification of the smart key, and transmits the counted result to the MCU 233 on the real-time basis.

The MCU 233 receives the time counted by the timer, and decides whether or not the prescribed time T has been passed at step S414. In case it is decided at step S414 that the prescribed time T has not passed, the MCU 233 decides whether or not the ignition switch 210 is turned ON at step S418.

In case it is decided at step S414 that the prescribed time T has passed, that is, the ignition switch 210 is not turned ON within the prescribed time T, the MCU 233 turn the starting control relay 234 OFF at step S416. Then, the MCU 233 repeats the above process from step S402.

If it is decided that the ignition switch 210 is not turned ON at step S418, the MCU repeats the steps S414 and S418 until the prescribed time T is reached.
If it is decided that the ignition switch 210 is turned ON within the prescribed time T at step S418, the MCU 233 supplies the electric power to the solenoid 251 of the starting motor driving part 250 through the starting relay 240 at step S420, and thus the starting motor 253 is driven so that the engine can be started. Through the above-described steps, the successive process for the starting of the automobile engine through the radio communication between the smart key 220 and the smart key ECU 230 is finished.

The detailed description in the above referring to the drawings is merely exemplary, that is, it is intended for describing the present invention, not for limiting the meaning of the claims or the scope of the claimed present invention. Therefore, it should be understood a various modification and another equivalent embodiments might be derived from the present invention by an ordinary-skilled person of the art. Hence, the substantial scope of the present invention should be defined on the basis of the technical idea of the claims attached hereto.

As described in the above, according to the present invention, the starting of the engine is enabled through the verification of the smart key by smart key ECU, so that the automobile theft by way of copying of the key is prevented. That is, thanks to the present invention, the economic and metal damage of the owner can be avoided caused by the theft of the automobile.

Further, according to the present invention, the ignition switch of the automobile engine starting apparatus is realized as an ignition nob, so that the driver can start the engine without physically inserting the automobile key.

The present invention relates to an apparatus and method for starting automobile engine by a radio communication between an automobile smart key and a smart key electronic control unit (ECU). The present invention provides an apparatus and a method for the starting of an automobile engine wherein it is decided whether or not a transmission lever P position signal and a break pedal signal are decided to be ON, a smart key ECU requests a smart key for a smart key ID in case the both signals are ON, the smart key ECU receives the smart key ID from the smart key, performs the verification of the smart key using the received smart key ID and turns the starting control relay ON in case that the smart key is verified, and supplies the electric power which is supplied through the ignition switch to the starting motor thereby the automobile engine being started in case that the ignition switch is turned ON within the prescribed time T after the starting control relay is turned ON.

## Claims

1. A smart ECU of an automobile engine starting apparatus, comprising:
a transmission part which transmits a smart key ID request signal to a smart key wirelessly;
a receiving part which receives a smart key ID from the smart key;
a starting control relay which supplies an electric power provided through an ignition switch to a starting relay; and
an MCU which allows the transmission part to transmit a request signal of the smart key ID to the smart key in case the break pedal signal is turned ON at the state the transmission lever P position signal is ON, allows the receiving part to receive the smart key ID from the smart key, performs a verification of the smart key by comparing the received smart key ID with a prescribed ID, and turns the starting control relay ON in case the smart key is verified.

2. The smart ECU of the automobile engine starting apparatus according to claim 1, further comprising a timer which counts time which has lapsed since the verification of the smart key.

3. The smart ECU of the automobile engine starting apparatus according to claim 2, wherein the MCU turns the starting control relay OFF in case the ignition switch is not turned ON within the prescribed time.

4. The smart ECU of the automobile engine starting apparatus according to claim 3, wherein after the MCU turns the starting control relay OFF, the MCU turns the starting control relay ON in case the break pedal signal is turned ON again at the state the transmission lever position signal is ON.

5. An automobile engine starting apparatus, comprising:
an ignition switch which ignites an automobile engine thereby supplying electric power for the starting of an automobile;
a smart key which is prescribed with its unique ID therein and is able to communicate wirelessly;
a smart key ECU which performs a verification of the smart key in case that a transmission lever P position signal and a break pedal signal are ON, and
supplies the electric power which is supplied by the ignition switch to the other parts in case that the ignition switch is turned ON within a prescribed time T after the verification of the smart key;
a starting relay which switches the supply of the electric power according to the electric power which is supplied from the smart key ECU through the ignition switch; and
a starting motor driving part which is supplied with the electric power according to the switching of the starting relay and drives a driving motor for the starting of the automobile engine with the supplied electric power.

6. The automobile engine starting apparatus according to claim 5, wherein the smart key ECU comprising:
a transmission part which transmits a smart key ID request signal to a smart key wirelessly;
a receiving part which receives the smart key ID from the smart key;
a starting control relay which supplies an electric power provided through a ignition switch to a starting relay; and
a MCU which allows the transmission part to transmit the request signal of the smart key ID to the smart key in case the break pedal signal is turned ON at the state the transmission lever position signal is ON, allows the receiving part to receive the smart key ID from the smart key, performs a verification of the smart key by comparing the received smart key ID with a prescribed ID, and turns the starting control relay ON in case the smart key is verified.

7. The automobile engine starting apparatus according to claim 6, wherein the transmission part includes two or more antenna which transmit a wave with a frequency of 120 ~ 130 kHz for an LF communication, and the receiving part includes one or more antenna which receives a wave with a frequency of 310~320MHz or 430-440 MHz for an RF communication.

8. The automobile engine starting apparatus according to claim 7, wherein the smart key ECU further comprising a timer which counts time which has lapsed since the verification of the smart key and transmits the counted time to the MCU on a real-time basis.

9. The automobile engine starting apparatus according to claim 8, wherein the MCU cuts the electric power supplied to the starting motor driving part from the ignition switch in case that the ignition switch is not turned ON within the prescribed time using the counted time.

10. The automobile engine starting apparatus according to claim 9, wherein after the smart key ECU cuts the electric power which is supplied to the starting motor driving part from the ignition switch, the smart key ECU performs the verification of the smart key again in case the break pedal signal is turned ON at the state that the transmission lever P position signal is ON.

11. The automobile engine starting apparatus according to claim 10, wherein the ignition switch comprising an ignition knob which converts the ignition switch from the LOCK state to the START state without the automobile key being inserted, and supplies the electric power for the starting of the automobile engine in case that the ignition switch START signal is turned ON.

12. The smart ECU of the automobile engine starting apparatus according to claim 1, wherein the smart key ECU performs the verification of the smart key in case that the break pedal signal is turned ON at the state where the transmission lever P position signal is ON.

13. An automobile engine starting method comprising:
the first step where it is decided whether or not a transmission lever P position signal and a break pedal signal are decided to be ON;
the second step where a smart key ECU requests a smart key for a smart key ID in case the both signals are ON;
the third step where the smart key ECU receives the smart key ID from the smart key and performs the verification of the smart key using the received smart key ID;
the fourth step where a starting control relay is ON in case that the smart key is verified; and
the fifth step where the automobile engine is started by supplying the electric power which is supplied through an ignition switch to the starting motor through the starting relay in case that the ignition switch is turned ON within the prescribed time T after the starting control relay is turned ON.

14. The automobile engine starting method according to claim 13, wherein the fourth step further comprising a step where time is counted which has lapsed since the verification of the smart key ID.

15. The automobile engine starting method according to claim 14, wherein the fifth step further comprising a step where the starting control relay is turned OFF in case that the ignition switch is not turned ON within the prescribed time.

16. The automobile engine starting method according to claim 15, wherein the fifth step further comprising a step where the starting control relay is turned ON in case that the break pedal signal is ON under the state that the transmission lever P position signal is ON after the step where the starting control relay is turned OFF.

17. The automobile engine starting method according to claim 16, wherein in the second step, the smart key ID request signal is transmitted using two or more antenna which transmit a wave with a frequency of 120 ~ 130kHz for LF communication.

18. The automobile engine starting method according to claim 17, wherein in the third step, the ID is received from the smart key using antenna which receive a wave with a frequency of 310 ~ 320MHz or 430 - 440MHz for RF communication.

19. The automobile engine starting method according to claim 18, wherein the third step further comprising a step where the smart key is verified in case that the received smart key ID and the prescribed ID are compared with each other and are decided to be identical with each other.

20. The automobile engine starting method according to claim 19, wherein in the first step, it is decided whether or not the break pedal signal is turned ON at the state that the transmission lever P position signal is ON.
